# EUROPEAN PATENT SPECIFICATION

(11) **EP 2 277 723 B1**
(45) Date of publication and mention of the grant of the patent: **30.04.2014**
(21) Application number: 10169376.0
(22) Date of filing: 13.07.2010
(51) Int. Cl.: B60D 1/06, B62D 53/08

(54) **Ball coupling for in a loading floor**
Kugelkupplung in einer Ladeplattform
Attelage de remorque avec articulation à rotule incorporé dans une plate-forme

(30) Priority: 20.07.2009 NL 2003241
(43) Date of publication of application: 26.01.2011
(73) Proprietor: Wagenbouw Bolle B.V., 8305 BC Emmeloord (NL)
(72) Inventor: Evers, Evert Jan, 8305 BC, Emmeloord (NL)
(74) Representative: Klavers, Cornelis

(56) References cited:
- DE-A1- 2 605 928
- US-A- 2 202 753
- US-A- 3 909 033
- US-A- 4 121 893
- US-A1- 2003 047 908
- US-A1- 2003 173 757
- US-A1- 2009 295 125

## Description

The present invention relates to a ball coupling according to the preamble of claim 1.

The invention further relates to a vehicle combination provided with such a coupling.

Such ball couplings of the type comprising a ball mounted on a tow vehicle and a ball receiving means mounted on a towed vehicle are generally known.

A drawback of such a coupling is that when the tow vehicle and the towed vehicle are hitched together to form one vehicle combination, the ball, which objectionably projects behind the tow vehicle, will exert a certain pressure on the rear side of the vehicle at all times. As a result, the combination will invariably sag slightly at the location of the coupling, and the two vehicles will slightly incline towards each other, as a result of which the vehicle combination will not exhibit optimum driving and braking characteristics. This is all the more true of somewhat more heavily loaded combinations of vehicles and trailers with a high towball weight.

Because the towball projects behind the rear axle, as mentioned above, a moment develops in the horizontal plane, seen in the driving direction, as a result of transverse forces being exerted on the towball, as a result of which, combined with a high towball weight, the combination as a whole will more easily tend to sway, which may lead to unsafe situations.

US-4,121,893 which represents the closest prior art wherefrom claim 1 is delimited discloses a ball coupling comprising a ball mounted on a draw-bar of a towed vehicle and a ball receiving means mounted in upstanding position at the rear of a tow vehicle. Locking means which are in particular rotatable relative to each other are provided on the ball and on the ball receiving means for locking the ball and the ball receiving means together in the coupled condition thereof. The locking means includes a locking lever which as shown in the figures extends downwardly in coupled condition of the coupling.

The object of the invention is to provide an improved coupling of the type whose towball does not objectionably project behind the tow vehicle and which leads to a shorter vehicle combination exhibiting improved driving and braking characteristics.

In order to accomplish that object, the ball coupling according to the invention has the features of claim 1.

The advantage of the ball coupling according to the invention is that it provides a greater positioning freedom as regards the position of the ball receiving means on the tow vehicle. In principle said ball receiving means could be mounted on or to the loading platform of said vehicle and, in a special embodiment, even be integrated in the loading platform of, for example, a pick-up truck. In such cases the towbar with the towball no longer projects behind the tow vehicle and the ball receiving means to be coupled to the ball, which is normally mounted on a drawbar, does not add to the length of the vehicle combination. A shorter vehicle combination obtained by using the ball coupling according to the invention moreover leads to improved driving and braking characteristics of the combination, because the tow vehicle and the towed vehicle are better aligned.

It is furthermore advantageous that the combination of ball and ball receiving means thus formed makes it possible to use locking means, in particular rotatable locking means, capable of being adequately locked together in the position in which the ball and the ball receiving means are in all-around contact with each other.

The advantage is further that the upper side of the ball receiving means is substantially flush with the loading platform of the tow vehicle, the concealed (as it were) ball receiving means, which is usually covered, does not adversely affect the function of the loading platform. In other words, the advantages of the coupling according to the invention in terms of providing a reduced-length vehicle combination and improved driving characteristics are retained, whilst this does not lead to drawbacks as regards the carrying capacity and the loading and unloading characteristics of the loading platform of the vehicle in question.

Another embodiment of the ball coupling according to the invention is characterised in that the locking ring is configured with a positively lockable folding lever for locking the ball coupling.

The advantage of this is that the locking ring arranged on and around the ball, which is provided with the folding lever, which can be manually pivoted, if desired, makes it possible to lock the ball in its position in the ball receiving means, in spite of the fact that said ball receiving means is concealed in the loading platform floor.

The ball coupling according to the invention in which the above advantages are combined is characterised in that the ball receiving means is integrated in the floor of the loading platform of the tow vehicle, being substantially flush with the floor of the tow vehicle and being preferably symmetrically mounted in a longitudinal plane of the tow vehicle.

Advantageous is the fact that forces or vibrations exerted on or generated by the ball are transmitted at a previously determined, in connection with the loads to be borne, central position in the loading platform of the tow vehicle. In other words, this embodiment of the ball coupling does not lead to additional adaptations to the vehicles in question connected with loads or forces that may occur. At the most, a simply auxiliary frame will be mounted for transmitting forces from the locking ring holder and the ball socket to the chassis of the tow vehicle.

A correct positioning of the practically frictionless ball coupling in the floor of the loading platform of the tow vehicle ensures that no moment will be exerted in the horizontal plane, seen in the driving direction, because no transverse forces will be exerted on the ball. Because of this, swaying of the vehicle combination will occur less easily, which has a positive effect on safety.

Moreover, the towed vehicle can be unhitched in any position and at any angle.

Further detailed embodiments of the ball coupling, which are defined in the other claims, and their concomitant advantages will be set forth in the description below.

The ball coupling according to the present invention will now be explained in more detail with reference to the figures below, in which like parts are indicated by the same numerals. In the drawing:
Figure 1 shows a partial cross-sectional view of an embodiment in which the ball coupling according to the invention is mounted in the loading platform of a tow vehicle;
Figure 2 is a side view of an embodiment of the ball coupling according to the invention; and
Figure 3 is a top plan view of the ball coupling according to figure 2.

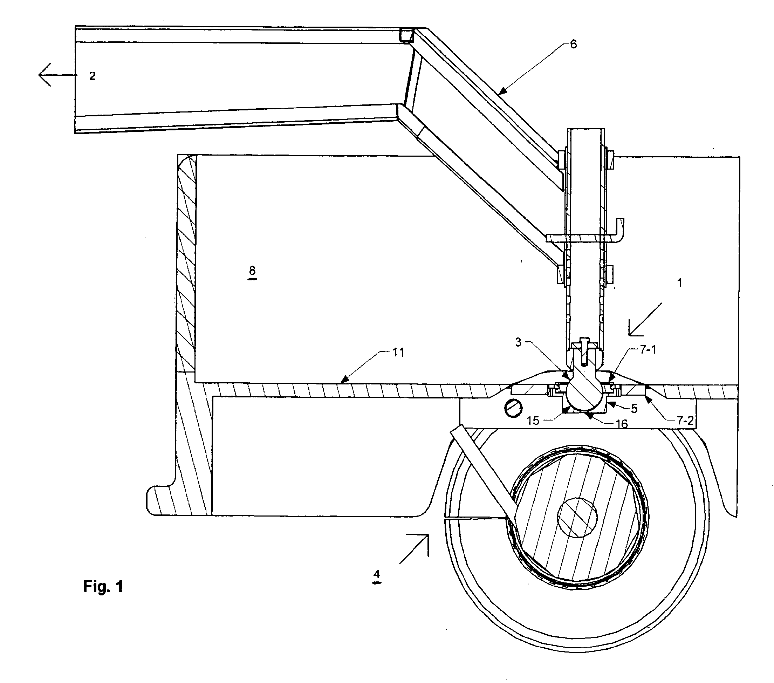

Figures 1-3 show a ball coupling 1 comprising a ball 3 mounted on a (schematically shown) towed vehicle 2 and a ball receiving means 5 mounted on a (partially shown) tow vehicle 4. In the embodiment shown in figure 1, the ball 3 is fixed to the end of a swan neck 6. The ball 3 is surrounded by a loose, rotatable locking ring 7-1, which has an internal diameter which is smaller than the external diameter of the ball 3. The ball receiving means 5, which may be mounted in the loading platform 8 of the tow vehicle 4, for example, has a locking ring holder 7-2 provided on the upper side of the ball receiving means 5. The locking ring 7-1 is provided with a screw thread or, as shown, with screw teeth 9 that fit in corresponding openings 10 in the holder 7-2. Rotation of the locking ring 7-1 causes the teeth 9 to become fixed in the locking ring holder 7-2, as a result of which the ball 3 is rotatable in the ball receiving means 5 though being firmly retained therein by means of the rotatable locking means 7-1, 7-2, and the ball coupling 1 is locked in the coupled condition.

Preferably, the ball receiving means 5 is integrated in the floor 11 of the loading platform 8 of the tow vehicle 4. In that case there is no need for a tow bar at the rear side of the vehicle 4. Because the floor 11 of a loading platform 8 is strong by nature, on account of the cargo that is normally transported thereon, the loading platform floor 11 need not be additionally strengthened in order to make it possible to mount the ball receiving means 5 in said floor 11, at least insofar as a transverse beam that may be provided at that location does not form an impediment in that case. Advantageously, the ball receiving means 5 can be concealed in an under the loading platform floor 11, preferably in such a manner that the upper side of the ball receiving means 5 or, in this case, the locking ring holder 7-2, is flush with the substantially flat (apart from any ridges that may be provided in the floor) floor 11 of the tow vehicle 4. In the uncoupled condition, the ball coupling integrated in the loading platform will not form an impediment when loading, transporting and unloading freight.

The ball receiving means 5 will generally be positioned symmetrically and preferably, in connection with a stable driving behaviour, slightly in front of the rear axle, in a longitudinal plane D through the vehicle 2. The forces exerted on the loading platform floor 11 by the ball 3 via the ball receiving means 5 are in that case uniformly distributed over the front and rear wheels and the suspension and shock absorbers, so that the driving and braking characteristics will remain optimal.

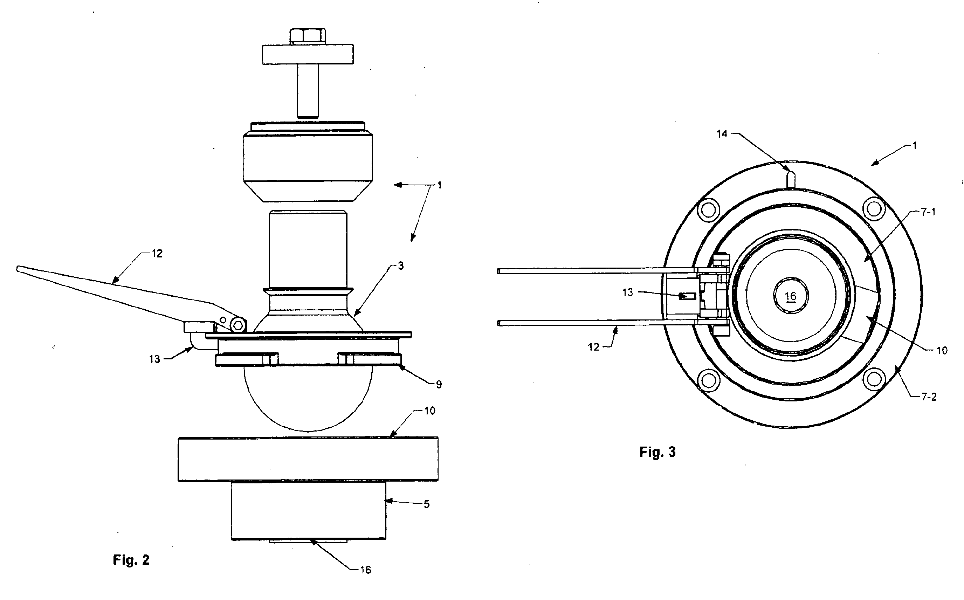

The aforesaid rotation of the locking ring 7-1 can be effected by means of a motor, such as hydraulically, pneumatically or electrically driven motor, but also by means of a small tool or by manual force. In the latter case, the locking ring may be configured with a lever 12 which can be swung up manually, as is shown in figures 2 and 3, and which is pivot-mounted to the locking ring 7-1. The locking ring 7-1 is then secured in the locking ring holder 7-2 by raising the lever 12 and subsequently rotating the locking ring 7-1. Following that, the lever 12 can be pivoted down, possibly aided by spring force, and when a cam 13 slips into a recess 14 provided for that purpose, with the teeth 9 properly locked in place, the lever 12 can be moved further downwards. As a result, a first positive locking engagement is obtained and it is possible to see at a single glance whether the coupling is correctly locked. Moreover, the first locking engagement can be secured by means of a (cotter) pin, so that a second positive locking engagement is obtained, which, incidentally, is mandated by relevant European law.

In practice it is advantageous to design the ball 3 and a socket 15 of the ball receiving means 5, in which the ball 3 is secured in the coupled condition of the coupling 1, to have precisely corresponding radii of curvature. Because of this, and because of the fact that the locking means 7 provide an effective locking action, there will be virtually no play between the ball 3 and the socket 15. Since the centres of the ball 3 and the ball receiving means 5 are vertically aligned, the amount of wear will be minimal.

The aforesaid socket 15, in which the ball 3 will be positioned, which socket is also referred to as "coupling pan" or "coupling cup", is provided with a hole 16 at the bottom side, usually in the centre, through which hole dirt that may accumulate in the socket 15 can escape. Furthermore, grooves may be formed in the wall of the socket 15 to enable an easy discharge of dirt and grease.

The ball 3 and in particular the socket 15 of the ball receiving means 5 are made of an easily machinable, wear-resistant, usually metallic material.

## Claims

1. A ball coupling (1) comprising a ball (3) mounted on a towed vehicle (2) and a ball receiving means (5) mounted on a tow vehicle (4), wherein locking means (7-1, 7-2), which are in particular rotatable relative to each other, are provided on said ball (3) and said ball receiving means (5) for locking the ball (3) and the ball receiving means (5) together in the coupled condition thereof, **characterised in that** the ball (3) is mounted on the end of a swan neck (6) of the towed vehicle (2) and that the ball receiving means (5), which is mounted in the floor (11) of the loading platform (8) of the tow vehicle (4), has an upper side which is substantially flush with the loading platform (8) of he tow vehicle (4).

2. A ball coupling (1) according to claim 1, **characterised in that** the ball receiving means (5) is integrated in the loading platform of the tow vehicle (4).

3. A ball coupling (1) according to claim 1 or 2, **characterised in that** the ball receiving means (5) is mounted, preferably symmetrically, in a longitudinal plane of the tow vehicle (4).

4. A ball coupling (1) according to any one of claims 1-3, **characterised in that** the ball (3) and the socket (15) in the ball receiving means (5) have corresponding radii of curvature.

5. A ball coupling (1) according to any one of claims 1-4, **characterised in that** the locking means (7-1, 7-2) comprise a locking ring (7-1), which can be rotated over the ball (3), and a corresponding locking ring (7-2) mounted to the upper side of the ball receiving means (5).

6. A ball coupling (1) according to claim 5, **characterised in that** the locking ring (7-1) is configured as a mechanically or manually actuated locking ring to be secured t-o the locking ring (7-2) by rotation.

7. A ball coupling (1) according to claim 5 or 6, **characterised in that** the locking ring (7-2) is configured with a positively lockable folding lever (12) for locking the ball coupling (1).

8. A ball coupling (1) according to any one of claims 1-7, **characterised in that** the ball receiving means (5) is integrated in the loading platform (8) of the tow vehicle, being substantially flush with the floor (11) of the tow vehicle and being symmetrically mounted in a longitudinal plane of the tow vehicle (4).

9. A ball coupling (1) according to any one of claims 1-8, **characterised in that** at least the ball (3) and the ball receiving means (5) are made of an easily machinable, metallic, wear-resistant material.

10. A vehicle combination comprising a ball coupling (1) according to any one of claims 1-9.

## Patentansprüche

1. Kugelkupplung (1), die eine Kugel (3) aufweist, die auf ein geschlepptes Fahrzeug (2) montiert ist, und Kugelaufnahmemittel (5), das auf ein Schleppfahrzeug (4) montiert ist, wobei Verriegelungsmittel (7-1, 7-2), die insbesondere in Bezug aufeinander drehbar sind, an der Kugel (3) und dem Kugelaufnahmemittel (5) zum Verriegeln der Kugel (3) und des Kugelaufnahmemittels (5) gemeinsam in deren gekuppeltem Zustand vorgesehen sind, **dadurch gekennzeichnet, dass** die Kugel (3) an das Ende eines Schwanenhalses (6) des geschleppten Fahrzeugs (2) montiert ist, und dass das Kugelaufnahmemittel (5), das in den Boden (11) der Ladeplattform (8) des Schleppfahrzeugs (4) montiert ist, eine Oberseite hat, die im Wesentlichen mit der Ladeplattform (8) des Schleppfahrzeugs (4) bündig ist.

2. Kugelkupplung (1) nach Anspruch 1, **dadurch gekennzeichnet, dass** das Kugelaufnahmemittel (5) in die Ladeplattform des Schleppfahrzeugs (4) eingebaut ist.

3. Kugelkupplung (1) nach Anspruch 1 oder 2, **dadurch gekennzeichnet, dass** das Kupplungsaufnahmemittel (5) vorzugsweise symmetrisch in einer Längsebene des Schleppfahrzeugs (4) montiert ist.

4. Kugelkupplung (1) nach einem der Ansprüche 1 bis 3, **dadurch gekennzeichnet, dass** die Kugel (3) und die Fassung (15) in dem Kugelaufnahmemittel (5) entsprechende Krümmungsradien haben.

5. Kugelkupplung (1) nach einem der Ansprüche 1 bis 4, **dadurch gekennzeichnet, dass** das Verriegelungsmittel (7-1, 7-2) einen Verriegelungsring (7-1) aufweist, der über die Kugel (3) gedreht werden kann, und einen entsprechenden Verriegelungsring (7-2), der an die Oberseite des Kugelaufnahmemittels (5) montiert ist.

6. Kugelkupplung (1) nach Anspruch 5, **dadurch gekennzeichnet, dass** der Verriegelungsring (7-1) als ein mechanisch oder manuell betätigter Verriegelungsring, der an dem Verriegelungsring (7-2) durch Drehung gesichert werden soll, konfiguriert ist.

7. Kugelkupplung (1) nach Anspruch 5 oder 6, **dadurch gekennzeichnet, dass** der Verriegelungsring (7-2) mit einem schlüssig verriegelbaren Klapphebel (12) zum Verriegeln der Kugelkupplung (1) konfiguriert ist.

8. Kugelkupplung (1) nach einem der Ansprüche 1 bis 7, **dadurch gekennzeichnet, dass** das Kugelaufnahmemittel (5) in die Ladeplattform (8) des Schleppfahrzeugs integriert ist, im Wesentlichen mit dem Boden (11) des Schleppfahrzeugs bündig und symmetrisch in einer Längsebene des Schleppfahrzeugs (4) montiert ist.

9. Kugelkupplung (1) nach einem der Ansprüche 1 bis 8, **dadurch gekennzeichnet, dass** mindestens die Kugel (3) und das Kugelaufnahmemittel (5) aus einem leicht bearbeitbaren, metallischen, abnutzungsfesten Material hergestellt sind.

10. Fahrzeugkombination, die eine Kugelkupplung (1) nach einem der Ansprüche 1 bis 9 aufweist.

## Revendications

1. Attelage de remorque avec articulation à rotule (1) comprenant une boule d'attelage (3) montée sur un véhicule tracté (2) et un moyen de réception de boule d'attelage (5) monté sur un véhicule tracteur (4) dans lequel les moyens de verrouillage (7-1, 7-2) qui peuvent en particulier tourner l'un par rapport à l'autre, sont prévus sur ladite boule d'attelage (3) et lesdits moyens de réception de boule d'attelage (5) pour bloquer la boule d'attelage (3) et les moyens de réception de boule d'attelage (5) ensemble à l'état accouplé de ceux-ci, **caractérisé en ce que** la boule d'attelage (3) est montée sur l'extrémité d'un col de cygne (6) du véhicule tracté (2) et **en ce que** le moyen de réception de boule d'attelage (5), qui est monté dans le plancher (11) de la plateforme de chargement (8) du véhicule tracteur (4), possède un côté supérieur qui est pour l'essentiel affleurant à la plateforme de chargement (8) du véhicule tracteur (4).

2. Attelage de remorque avec articulation à rotule (1) selon la revendication 1, **caractérisé en ce que** le moyen de réception de boule d'attelage (5) est intégré dans la plateforme de chargement du véhicule tracteur (4).

3. Attelage de remorque avec articulation à rotule (1) selon la revendication 1 ou 2, **caractérisé en ce que** le moyen de réception de boule d'attelage (5) est monté de préférence symétriquement, dans un plan longitudinal du véhicule tracteur (4).

4. Attelage de remorque avec articulation à rotule (1) selon une quelconque des revendications 1 à 3, **caractérisé en ce que** la boule d'attelage (3) et la rotule (15) dans le moyen de réception de boule d'attelage (5) ont des rayons de courbure correspondants.

5. Attelage de remorque avec articulation à rotule (1) selon une quelconque des revendications 1 à 4 **caractérisé en ce que** les moyens de verrouillage (7-1, 7-2) comprennent un anneau de verrouillage (7-1) qui peut être tourné sur la boule d'attelage (3) et un anneau de verrouillage correspondant (7-2) monté sur le côté supérieur du moyen de réception de boule d'attelage (5).

6. Attelage de remorque avec articulation à rotule (1) selon la revendication 5 **caractérisé en ce que** l'anneau de verrouillage (7-1) est configuré comme un anneau de verrouillage actionné mécaniquement ou manuellement pour être fixé à l'anneau de verrouillage (7-2) par rotation.

7. Attelage de remorque avec articulation à rotule (1) selon la revendication 5 ou 6, **caractérisé en ce que** l'anneau de verrouillage (7-2) est configuré avec un levier pliant positivement blocable (12) pour verrouiller l'attelage avec articulation à rotule (1).

8. Attelage de remorque avec articulation à rotule (1) selon une quelconque des revendications 1 à 7, **caractérisé en ce que** le moyen de réception de boule d'attelage (5) est intégré dans la plateforme de chargement (8) du véhicule tracteur étant pour l'essentiel affleurant au plancher (11) du véhicule tracteur et étant symétriquement monté dans un plan longitudinal du véhicule tracteur (4).

9. Attelage de remorque avec articulation à rotule selon une quelconque des revendications 1 à 8, **caractérisé en ce qu'**au moins la boule d'attelage (3) et le moyen de réception de boule d'attelage (5) sont faits d'un matériau métallique, résistant à l'usure et facilement usinable.

10. Une combinaison de véhicules comprenant un attelage de remorque avec articulation à rotule (1) selon une quelconque des revendications 1 à 9.
